# EUROPEAN PATENT APPLICATION

(11) **EP 3 778 761 A1**
(43) Date of publication of application: **17.02.2021**
(21) Application number: 19784475.6
(22) Date of filing: 09.04.2019
(51) Int. Cl.: C08L 29/04, B65D 65/46, C08J 5/18, C08K 5/098, C08K 5/521

(54) **WATER-SOLUBLE FILM**

(30) Priority: 10.04.2018 JP 2018075766
(71) Applicant: Aicello Corporation, Toyohashi-shi, Aichi 441-1115 (JP)
(72) Inventor: TANIKAWA, Atsushi, Toyohashi-shi, Aichi 441-1115 (JP); MIZOBATA, Kazuyuki, Toyohashi-shi, Aichi 441-1115 (JP)
(74) Representative: Grünecker Patent- und Rechtsanwälte PartG mbB
(86) International application number: PCT/JP2019/015370
(87) International publication number: WO 2019/198683

(57) **Abstract**

An object is to obtain a water-soluble film that ensures lower roll feeding tension, excellent anti-blocking property, etc., and does not stick to metal seal bars, etc., during heat sealing. As a solution, a water-soluble film is provided that contains A to D below:
A. a polyvinyl alcohol resin;
B. a plasticizer;
C. an alkali metal salt of aliphatic acid having 6 to 22 carbon atoms and/or D. phosphate ester surfactant.

## Description

### Technical Field

The present invention relates to a water-soluble film that facilitates heat sealing and water sealing.

### Background Art

As described in Patent Literature 1, water-soluble films for wrapping liquid detergents, etc., into single-use packets --particularly films containing modified or unmodified polyvinyl alcohol resin, glycerin, and sorbitol, as well as colorant in some cases-- are known, where wrapping a liquid detergent, etc., with such water-soluble films requires a process of heat-sealing the edges of the films together to hermetically seal the liquid detergent.

In this process, sufficient heating is required to make sure the seal is airtight. Also, to perform a continuous operation of hermetic heat sealing, heated seal bars, etc., are used to repeat pressure-bonding of the edges of water-soluble films together.

### Background Art Literature

### Patent Literature

Patent Literature 1: International Patent Laid-open No. 2016/160116

### Summary of the Invention

### Problems to Be Solved by the Invention

As a means for wrapping a detergent or other content with water-soluble films containing polyvinyl alcohol, a process of heat-sealing the polyvinyl alcohol films together, as described above, is adopted. And, in the heat-sealing process, a metal seal bar, metal seal roll, etc., is used to heat and pressure-bond the polyvinyl alcohol films.

Heat sealing with such metal seal bar, etc., requires a process where the heated metal seal bar, etc., is brought in contact with two polyvinyl alcohol films placed one atop the other, and once the films have been heated, the metal seal bar, etc., is separated from the polyvinyl alcohol films.

Normally there is no problem separating the metal seal bar, etc., from the heat-sealed polyvinyl alcohol films. Even when the metal seal bar, etc., comes in contact with particularly lengthy water-soluble films successively to heat-seal the films, movement of the water-soluble films generate peel forces from the metal seal bar, etc., and consequently the water-soluble films separate from the metal seal bar, etc. In some cases, however, the films may not separate easily. When this happens, the heat-sealed polyvinyl alcohol films adhere to the metal seal bar, etc., so a solution must be devised such as lowering the heat-sealing temperature or reducing the production speed. In some instances, however, the heat-sealing process itself may have to be stopped, in which case the productivity will drop.

To solve the occurrences of phenomena that lead to this drop in productivity, and thus to prevent sticking of polyvinyl alcohol films to metal seal bars, etc., the present invention, which was completed through a study of the compositional makeups of polyvinyl alcohol films, aims to lower the adhesion forces of these films on metal seal bars, etc.

Additionally, when a rolled water-soluble film is unrolled for use, the process of using the water-soluble film can be facilitated when the required feeding tension is low. Also, preferably the water-soluble film has low blocking strength because the water-soluble films will not adhere together but remain easily separable while the film is stored in a rolled state or while capsules and other products made with the water-soluble film are stored.

It should be noted that, while the magnitude of the film's adhesion strength on metal seal bars, etc., and the magnitudes of the roll feeding tension and blocking strength appear to be similar, actually there are no correlations among these properties.

Another means for wrapping a detergent or other content with water-soluble films containing polyvinyl alcohol is a method of sealing the content with the water-soluble films using water, in which case heated metal seal bars, etc., are not used and therefore the aforementioned effects relating to metal seal bars, etc., are not particularly required. In terms of the effects relating to roll feeding tension, anti-blocking property, etc., however, the properties required of the water-soluble films remain the same.

It should be noted that water sealing is a method for causing water-soluble films to adhere to each other to create a seal, by applying water, or water containing at least one type of substance selected from aqueous organic solvents and various additives, on one side of at least one of the water-soluble films, and then pressure-bonding the two films before the applied water dries.

### Means for Solving the Problems

After studying in earnest to solve the aforementioned problems, the inventor of the present invention found that they could be solved by the following means and eventually completed the present invention:
1. A water-soluble film containing A to D below:
   A. a polyvinyl alcohol resin;
   B. a plasticizer;
   C. an alkali metal salt of aliphatic acid having 6 to 22 carbon atoms and/or D. phosphate ester surfactant.
2. The water-soluble film according to 1, wherein C is an alkali metal salt of aliphatic acid having 6 to 14 carbon atoms.
3. The water-soluble film according to 1 or 2 whose tensile modulus is 100 MPa or higher.
4. The water-soluble film according to any one of 1 to 3, having F. a powder deposited on one side or both sides thereof.
5. The water-soluble film according to any one of 1 to 4, containing E. a filler.
6. The water-soluble film according to any one of 1 to 5, having a surface roughness (Sa) of 400 nm or lower and/or surface gloss of 15% or higher on one side or both sides thereof.
7. The water-soluble film according to 6, having a surface roughness (Sa) of 100 nm or lower and/or surface gloss of 100% or higher on one side or both sides thereof.
8. The water-soluble film according to any one of 1 to 7 whose blocking strength is 70 mN/25 mm or lower.

### Effects of the Invention

According to the present invention, when the polyvinyl alcohol resin film is heat-sealed, the low adhesion strength of the polyvinyl alcohol resin film to the metal seal bar, etc., facilitates the heat-sealing process without the polyvinyl alcohol resin film sticking to the seal bar, etc.

Additionally, the present invention keeps the film surface from becoming sticky or tacky during storage, and also prevents the polyvinyl alcohol resin film from exhibiting blocking behavior after storage in a rolled state. Furthermore, when the polyvinyl alcohol resin film is used as a wrapping film to produce wrapped packets and these multiple wrapped packets are stored in contact with each another, occurrence of blocking can be prevented between them.

### Mode for Carrying Out the Invention

The present invention is explained in detail.

### (A. Polyvinyl Alcohol Resin)

The water-soluble film proposed by the present invention contains a polyvinyl alcohol resin.

The polyvinyl alcohol resin is not limited in any way, and any known polyvinyl alcohol resin may be used. A polyvinyl alcohol resin is obtained according to any known method, by polymerizing a vinyl ester according to the solution polymerization method, bulk polymerization method, suspension polymerization method or other known method to obtain a polymer, and then saponifying the polymer. The saponification may be performed using an alkali or acid, but use of an alkali is particularly preferred. As for the aforementioned polyvinyl alcohol resin, only one type of polyvinyl alcohol resin may be used or two or more types may be combined.

The aforementioned vinyl ester may be vinyl acetate, vinyl formate, vinyl propionate, vinyl butyrate, vinyl pivalate, vinyl versatate, vinyl laureate, vinyl stearate, vinyl benzoate, etc.

The polyvinyl alcohol resin may be unmodified, or it may be a maleic acid-modified polyvinyl alcohol resin or other anionic group-modified polyvinyl alcohol resin, or cationic group-modified polyvinyl alcohol resin.

Considering that the resin's solubility in water will be adjusted, preferably an anionic group-modified polyvinyl alcohol resin is adopted. The anionic group, while not limited in any way, may be the carboxyl group, sulfonic acid group, phosphoric acid group, etc., for example.

The anionic group-modified polyvinyl alcohol resin, while not limited in any way, may be a maleic acid-modified polyvinyl alcohol resin, itaconic acid-modified polyvinyl alcohol resin, acrylic acid-modified polyvinyl alcohol resin, methacrylic acid-modified polyvinyl alcohol resin, 2-acrylamide-2-methyl propane sulfonic acid-modified polyvinyl alcohol resin, etc., for example.

If a modified polyvinyl alcohol resin is adopted, the mol number of the monomers, etc., in the modified polyvinyl alcohol resin that were reacted to cause modification is preferably 10.0 percent by mol or lower, or more preferably 5.0 percent by mol or lower, or yet more preferably 4.0 percent by mol or lower, as the ratio to the mol number of all monomers constituting the modified polyvinyl alcohol resin (degree of modification). Additionally, if a modified polyvinyl alcohol resin is adopted, the mol number of the monomers, etc., in the modified polyvinyl alcohol resin that were reacted to cause modification is preferably 0.1 percent by mol or higher, or more preferably 1.0 percent by mol or higher, or yet more preferably 1.5 percent by mol or higher, relative to the mol number of all monomers constituting the modified polyvinyl alcohol resin. A desired degree of modification may be selected in the ranges between these upper and lower limits.

The polyvinyl alcohol resin used in the embodiment herein may already contain a repeating unit constituted by the monomers listed below. It should be noted that, to the extent that the effects of the present invention are not inhibited, the following monomers may be contained by percentages similar to the aforementioned percentages of monomers used for modification, relative to all monomers constituting the polyvinyl alcohol resin.

Examples of such monomers include: ethylene, propylene, isobutylene, α-octene, α-dodecene, α-octadecene, and other olefins; complete alkyl esters of acrylic acid, methacrylic acid, crotonic acid, maleic acid, maleic acid anhydride, itaconic acid, and other unsaturated acids; acrylonitrile, methacrylonitrile, and other nitriles; acrylamide, methacrylamide, and other amides; alkyl vinyl ethers; N-acrylamide methyl trimethyl ammonium chloride, allyl trimethyl ammonium chloride, dimethyl diallyl ammonium chloride, dimethyl allyl vinyl ketone, N-vinyl pyrrolidone, vinyl chloride, vinylidene chloride; polyoxyethylene (meth)allyl ether, polyoxypropylene (meth)allyl ether, and other polyoxyalkylene (meth)allyl ethers; polyoxyethylene (meth)acrylate, polyoxypropylene (meth)acrylate, and other polyoxyalkylene (meth)acrylates; polyoxyethylene (meth)acrylamide, polyoxypropylene (meth)acrylamide, and other polyoxyalkylene (meth)acrylamides; polyoxyethylene (1-(meth)acrylamide-1,1-dimethyl propyl) ester, polyoxyethylene vinyl ether, polyoxypropylene vinyl ether, polyoxyethylene allylamine, polyoxypropylene allylamine, polyoxyethylene vinylamine, polyoxypropylene vinylamine, diacrylacetone amide, etc.

Examples of such monomers further include: N-acrylamide methyl trimethyl ammonium chloride, N-acrylamide ethyl trimethyl ammonium chloride, N-acrylamide propyl trimethyl ammonium chloride, 2-acryloxyethyl trimethyl ammonium chloride, 2-methacryloxyethyl trimethyl ammonium chloride, 2-hydroxy-3-methacryloyloxypropyl trimethyl ammonium chloride, allyl trimethyl ammonium chloride, methallyl trimethyl ammonium chloride, 3-butene trimethyl ammonium chloride, dimethyl diallyl ammonium chloride, diethyl diallyl ammonium chloride, and other cationic group-containing monomers, etc.

The average degree of saponification of the polyvinyl alcohol resin, while not limited in any way, is preferably in a range of 70 to 100 percent by mol in the interest of facilitating the adjustment of the resin's solubility in water, or more preferably 80 to 99 percent by mol, or even more preferably 87 to 98 percent by mol in particular.

It should be noted that the aforementioned average degree of saponification is measured according to JIS K 6726-1994.

The 4-percent-by-weight aqueous solution viscosity of the polyvinyl alcohol resin at 20°C, while not limited in any way, is preferably 2.8 to 240 mPa·s, or more preferably 5 to 150 mPa·s, or even more preferably 8 to 50 mPa·s in particular, for example. So long as the viscosity is within the aforementioned ranges, the film will achieve particularly favorable mechanical strength and solubility. It should be noted that the 4-percent-by-weight aqueous solution viscosity is measured according to JIS K 6726-1994.

The degree of polymerization of the aforementioned polyvinyl alcohol resin is not limited in any way. For example, it is preferably 400 to 3000, or more preferably 500 to 2000. So long as the degree of polymerization is within the aforementioned ranges, the viscosity can be adjusted to an appropriate range when forming the water-soluble wrapping film. The aforementioned degree of polymerization is measured according to JIS K 6726-1994.

Preferably the content of the polyvinyl alcohol resin is 60 to 97 percent by weight in 100 percent by weight of the water-soluble film proposed by the present invention.

If the content of the aforementioned polyvinyl alcohol resin is lower than the aforementioned 60 percent by weight, the plasticizer, etc., may bleed out from the water-soluble film; if the content exceeds 97 percent by weight, on the other hand, the water-soluble film may not have sufficient strength or its water resistance may drop.

Also, keeping the content of the polyvinyl alcohol resin in this range facilitates the adjustment of the moisture content of the water-soluble film to an appropriate range.

### (B. Plasticizer)

The water-soluble film proposed by the present invention contains a plasticizer.

Water-soluble films are transported, stored, and used in hot, humid regions as well as in cold places, and thus require high tensile strength and durability. Impact resistance at low temperature is also important. As it contains a plasticizer, the water-soluble film proposed by the present invention can have a lower glass transition point as well as improved low-temperature durability and solubility in water. Also, the plasticizer in the film lowers its tensile modulus and makes the film flexible.

The aforementioned plasticizer is not limited in any way, and any of the substances generally used as plasticizers for polyvinyl alcohol resins may be used, examples of which include: glycerin, diglycerin, diethylene glycol, trimethylol propane, triethylene glycol, dipropylene glycol, propylene glycol, and other polyalcohols; polyethylene glycol, polypropylene glycol, and other polyethers; bisphenol A, bisphenol S or other phenol derivatives; sorbitol and other sugar alcohols; N-methyl pyrrolidone and other amide compounds; compounds produced by adding ethylene oxide to glycerin, pentaerythritol, sorbitol, and other polyalcohols; PEG400 and other polyethylene glycols, etc. Any of the foregoing may be used alone, or two or more types may be combined.

Among the aforementioned plasticizers, glycerin, diglycerin, sorbitol, trimethylol propane, polyethylene glycol, polypropylene glycol, triethylene glycol, dipropylene glycol, and propylene glycol are preferred from the viewpoint of improving the water solubility, while glycerin, diglycerin, sorbitol, trimethylol propane, and PEG400 are particularly preferred for their large effect on improving the water solubility.

Also, from the viewpoints of contributing to desirable properties of the film as a wrapping material, such as flexibility, lower adhesion strength on seal bars, and blocking prevention, it is more preferable to combine glycerin and sorbitol, in which case the compounding ratio of glycerin and sorbitol is preferably "glycerin : sorbitol" = 1:0.1 to 1:1, or more preferably 1:0.3 to 1:0.7, based on ratio by weight.

It should be noted that this combined use of glycerin and sorbitol is particularly preferable when the water-soluble film is obtained by the solution-casting method.

The water-soluble film proposed by the present invention contains the aforementioned plasticizer by 3 to 60 parts by weight relative to 100 parts by weight of the polyvinyl alcohol resin. If the content of the aforementioned plasticizer is lower than 3 parts by weight, compounding the plasticizer will have no effect. If the compounding proportion of the plasticizer exceeds 60 parts by weight, on the other hand, the plasticizer will bleed out more and the anti-blocking property of the obtained water-soluble film will worsen.

The content of the aforementioned plasticizer is preferably 6 to 55 parts by weight, or more preferably 8 to 45 parts by weight.

### (C. Alkali Metal Salt of Aliphatic Acid Having 6 to 22 Carbon Atoms and/or D. Phosphate Ester Surfactant)

The water-soluble film proposed by the present invention contains an alkali metal salt of aliphatic acid having 6 to 22 carbon atoms and/or phosphate ester surfactant. Preferably, for example, an alkali metal salt of aliphatic acid having 6 to 14 carbon atoms is adopted.

As it contains such alkali metal salt of aliphatic acid and/or phosphate ester surfactant, the water-soluble film will have sufficient water solubility and uniform appearance required of a water-soluble film, while at the same time this alkali metal salt of aliphatic acid present on the surface of the water-soluble film can reduce the film's adhesion strength on metal seal bars, etc., to 700 gf/70 mm or lower, or more preferably to 500 gf/70 mm or lower, or yet more preferably to 400 gf/70 mm or lower, or even more preferably to 300 gf/70 mm or lower, or most preferably to 200 gf/70 mm or lower.

### [C. Alkali Metal Salt of Aliphatic Acid Having 6 to 22 Carbon Atoms]

The water-soluble film, regardless of whether it is obtained by the solution-casting method or melt extrusion method, may contain an alkali metal salt of aliphatic acid having 6 to 22 carbon atoms.

If an alkali metal salt of aliphatic acid having 6 to 22 carbon atoms is contained, the content of the alkali metal salt of aliphatic acid is preferably 0.03 to 3.00 parts by weight, or more preferably 0.10 to 2.00 parts by weight, or yet more preferably 0.20 to 1.00 parts by weight, relative to 100 parts by weight of the polyvinyl alcohol resin in the present invention. Under the present invention, presence of an alkali metal salt of aliphatic acid also in the surface layer of the water-soluble film has the effect of preventing the film from adhering to the metal seal bar, etc., during heat sealing.

The alkali metal salt of aliphatic acid having 6 to 22 carbon atoms under the present invention, while not limited in any way, is preferably a sodium or potassium salt of caproic acid, caprylic acid, capric acid, lauric acid, myristic acid, palmitic acid, stearic acid, behenic acid, or other aliphatic carboxylic acid, and the like.

If the content of the aforementioned alkali metal is lower than 0.03 parts by weight, the effect of preventing the water-soluble film from adhering to the metal seal bar, etc., during heat sealing may not be sufficient or the feeding tension and blocking strength of the rolled water-soluble film may become too high, while a content higher than 3.00 parts by weight is also troublesome in that further improvement of appearance or lowering of seal bar adhesion strength will become difficult.

One, two, or more types of these alkali metal salts of aliphatic acids may be used. Use of alkali metal salts of aliphatic acids having 6 to 22 carbon atoms is preferred, particularly for the purpose of heat sealing; however, adoption, among such alkali metal salts of aliphatic acids, of those having 6 to 14 carbon atoms can improve both the effect of lowering the film's adhesion strength on seal bars and the effect of preventing blocking between the surfaces of the water-soluble film, where the most preferred is to adopt alkali metal salts of aliphatic acids having 12 carbon atoms.

Adopting alkali metal salts of aliphatic acids whose number of carbon atoms is greater than 22, alkali metal salts of aliphatic acids whose number of carbon atoms is smaller than 6, or alkali earth metal salts of aliphatic acids instead of alkali metal salts of aliphatic acids, will increase the possibility of the water-soluble film having mottled appearance or excessively high blocking strength. Particularly when the film is obtained by the solution-casting method, preferably alkali metal salts of aliphatic acids having 6 to 22 carbon atoms are adopted.

It should be noted that, while aliphatic acid salts that are not alkali metal salts, as well as free organic acids, can also be compounded, in some cases compounding such aliphatic acid salts and free acids may negatively affect the effects otherwise achieved by compounding alkali metal salts of specific aliphatic acids and/or phosphate ester surfactants; accordingly, such aliphatic acid salts and free acids can be compounded only to the extent that the effects contemplated by the present invention are not negatively affected.

Additionally, if the water-soluble film is used in the manufacture of wrapped packets using water or aqueous solvent sealing instead of heat sealing, alkali metal salts of aliphatic acids having 6 to 22 carbon atoms may be adopted. Furthermore, alkali metal salts whose aliphatic acid has 6 to 14 carbon atoms can improve the anti-blocking property while also reducing the feeding tension.

### [D. Phosphate Ester Surfactant]

If the water-soluble film is obtained by the solution-casting method, preferably the film contains a phosphate ester surfactant, possibly in combination with an alkali metal salt of aliphatic acid having 6 to 22 carbon atoms.

Additionally, the film may also contain a phosphate ester surfactant when it is obtained by the melt extrusion method.

If a phosphate ester surfactant is contained, the content of the phosphate ester surfactant is preferably 0.03 to 1.00 parts by weight, or more preferably 0.10 to 0.8 parts by weight, or yet more preferably 0.20 to 0.60 parts by weight, relative to 100 parts by weight of the polyvinyl alcohol resin in the present invention. If the content of the phosphate ester surfactant is lower than 0.03 parts by weight, the effect of preventing the water-soluble film from adhering to the metal seal bar, etc., during heat sealing may not be sufficient, while a content exceeding 1.00 part by weight will make further improvement of appearance and lowering of seal bar adhesion strength difficult. Under the present invention, presence of a phosphate ester surfactant --especially of anionic type-- also in the surface layer of the water-soluble film has the effect of preventing the film from adhering to the metal seal bar, etc., during heat sealing.

Preferably the phosphate ester surfactant under the present invention is a polyoxyethylene alkyl ether phosphate ester salt.

A phosphate ester of higher alcohol ethylene oxide adduct is also a favorable choice for use as the phosphate ester surfactant. In this case, the number of ethylene oxide moles added is preferably 1 to 20 or so. Also, one or more types of monoesters, diesters, and triesters may be used. In addition, the phosphate ester surfactant may be an alkali metal salt, ammonium salt, or alkanol amine salt. Also, polyoxyethylene alkyl ether phosphate ester salts with C10 to C18 alkyl chains may be used favorably, of which those of primary alkyl or secondary alkyl are preferred.

### (E. Filler)

Preferably the water-soluble film proposed by the present invention contains silica, calcium carbonate, starch, talc, aluminosilicate salt, or other filler. As it contains such filler, the water-soluble film can have higher surface roughness and lower gloss to reduce the blocking strength and roll feeding tension, which allows for smooth feeding of the film from a securely rolled state.

The compounding ratio of a filler, if compounded, is 0.5 to 10 parts by weight relative to 100 parts by weight of the polyvinyl alcohol resin. If this ratio is lower than 0. 5 parts by weight, the compounding effect of the filler cannot be achieved sufficiently; if the ratio exceeds 10 parts by weight, on the other hand, the flexibility and heat-sealing property of the water-soluble film may be negatively affected.

The thickness of the water-soluble film proposed by the present invention is 25 to 100 µm, or preferably 28 to 90 µm. If the thickness is less than 25 µm, the film cannot have sufficient strength; on the other hand, a thickness exceeding 100 µm may lead to reduced ease of packaging and heat sealing when the film is heat-sealed for wrapping purposes, etc.

The moisture content is preferably 2.0 to 8.0 percent by weight, or more preferably 2.5 to 7.5 percent by weight, or most preferably 3.0 to 7.0 percent by weight.

Also, the heat-seal strength is preferably 7 to 15 N/15 mm, or more preferably 10 to 15 N/15 mm.

The water-seal strength is preferably 15 to 30 N/15 mm, or more preferably 20 to 30 N/15 mm.

The surface roughness Sa of the water-soluble film proposed by the present invention is preferably 600 nm or lower, or more preferably 400 nm or lower, or most preferably 100 nm or lower, while it is preferably 5 nm or higher.

The gloss of the water-soluble film proposed by the present invention is preferably 15% or higher, or more preferably 20% or higher, or most preferably 100% or higher.

The tensile modulus of the water-soluble film proposed by the present invention is preferably 15 to 4000 MPa, or more preferably 20 to 3000 MPa, or most preferably 30 to 2000 MPa.

The feeding tension of the water-soluble film proposed by the present invention, from a rolled state, is preferably 40 N or lower, or more preferably 20 N or lower, or most preferably 15 N or lower.

The blocking strength of the water-soluble film proposed by the present invention is preferably 70 mN/25 mm or lower, or more preferably 60 mN/25 mm or lower, or most preferably 40 mN/25 mm or lower.

### (F. Powder Deposition)

The water-soluble film proposed by the present invention can have a powder applied and deposited beforehand on at least one side of the film. The powder, which is a starch powder, talc, mica, or calcium carbonate powder, etc., increases the surface roughness of the water-soluble film while lowering its gloss to prevent blocking between the water-soluble films and to reduce the roll feeding tension of the film.

The depositing quantity of a powder, if applied, is 0.02 to 0.20 g/m², or preferably 0.03 to 0.20 g/m². If the depositing quantity is 0.02 g/m2 or less, the effect of applying and depositing the powder cannot be demonstrated fully, while depositing the powder by more than 0.20 g/m² not only contributes zero additional effect but doing so may also contaminate the wrapping environment due to dropping of excess powder from atop the film.

The water-soluble film proposed by the present invention may be further compounded, as necessary, with a colorant, flavoring agent, bulking agent, defoaming agent, release agent, UV absorbent, surfactant and other standard additives as deemed appropriate. To improve the peel property of the formed film or film solution itself on the dies, drums, and other metal surfaces of film-forming machines, a surfactant different from the aforementioned phosphate ester surfactant may be compounded by 0.01 to 5 parts by weight relative to 100 parts by weight of the polyvinyl alcohol resin.

It should be noted, however, that such surfactant does not contain any alkali metal salt of dibasic acid or alkali earth metal salt of aliphatic acid.

The water-soluble film may or may not have fine irregularities formed on its surface by embossing. The water-soluble film may be opaque or clear; the film may be made clear by adding less than 30 parts by weight of inorganic pigment or extender pigment, while titanium oxide offering particularly excellent concealing property may be added by less than 10 parts by weight or less than 8 parts by weight, relative to 100 parts by weight of the polyvinyl alcohol resin. If the water-soluble film is made opaque, any arbitrary pigment may be added as necessary to the extent that the effects of the present invention are not negatively affected. Also, any acrylic resin, fluid paraffin, sugar alcohol, and/or dipropylene glycol may or may not be contained.

### <Method for Manufacturing Water-soluble Film>

### (Obtaining Water-soluble Film from Aqueous Solution)

Although the method for manufacturing the water-soluble film proposed by the present invention is not limited in any way, one method that may be used involves casting over a support member an aqueous solution or aqueous solvent solution containing polyvinyl alcohol resin, plasticizer, and various additives, followed by drying the solution and then peeling the dried solution from the supporting member. Specific methods include the solution-casting method (casting method), roll coating method, spin coating method, screen coating method, fountain coating method, dipping method, and spray method.

The aforementioned supporting member is such that, when an aqueous solution containing polyvinyl alcohol resin, etc., is cast over it, the supporting member can maintain the aqueous solution on its surface (casting surface) and also support the water-soluble film to be obtained. It is essential that the dried film can be peeled. The material for the aforementioned supporting member may be, for example, a metal, polyolefin, polyester, acrylic resin, urethane resin, epoxy resin, etc. A supporting member formed by a material other than the foregoing may also be used. The aforementioned polyolefin may be ethylene, polypropylene, ethylene-vinyl acetate copolymer, ethylene-vinyl alcohol copolymer, etc. The aforementioned polyester may be polyethylene terephthalate, polyethylene naphthalate, etc. Preferably the material for the aforementioned supporting member is not a polyvinyl alcohol resin.

Regarding the method for drying the aqueous solution of polyvinyl alcohol resin that has been cast, etc., over the aforementioned supporting member, any method may be used as deemed appropriate without specific limitations. Drying methods include the natural drying method, heat drying method, etc. The side of the film in direct contact with air, not the surface (casting surface) side of the drying/supporting member, is called the "air surface."

The water-soluble film proposed by the present invention is obtained by peeling it from the supporting member at any timing before or after the subsequent drying.

When the method of casting an aqueous solution over a supporting member and drying the solution is adopted, the obtained water-soluble film can have excellent smoothness or fine irregularities on the surface of the water-soluble film according to the surface properties of the supporting member. Furthermore, the target substance to be wrapped may be a liquid, powder, or solid matter such as tablets. Additionally, among the alkali metal salts of aliphatic acids suggested in the present invention, preferably an alkali metal salt of aliphatic acid having 6 to 22 carbon atoms, or even one having 8 to 22 carbon atoms, or 6 to 18 carbon atoms, is used for the water-soluble film to be obtained by this method, where adopting an alkali metal salt of aliphatic acid having 6 to 14 carbon atoms can improve the anti-blocking property of the water-soluble film. Also, an alkali metal salt of aliphatic acid having 8 to 12 carbon atoms can improve the anti-blocking property even further.

Additionally, when the water-soluble film is obtained by casting an aqueous solution, preferably glycerin and/or sorbitol is selected as the plasticizer used under the present invention. By selecting such plasticizer, an excellent water-soluble film, especially in terms of having low adhesion strength to metal seal bars, etc., can be obtained due to the interaction between the plasticizer and the alkali metal salt of aliphatic acid or phosphate ester surfactant, particularly the alkali metal salt of aliphatic acid.

Furthermore, when the water-soluble film proposed by the present invention is obtained by casting an aqueous solution, a filler may or may not be compounded, a phosphate ester surfactant may or may not be compounded, and a powder may or may not be deposited.

### (Obtaining Water-soluble Film by Melt Extrusion)

Although the method for manufacturing the water-soluble film proposed by the present invention is not limited in any way, one method that may be used involves heating a polyvinyl alcohol resin to or above its melting point, or heating the resin with a small amount of water added, thereby melting the resin and then extruding the molten resin through a die using an extrusion machine. Specific methods include the inflation-molding method and T-die molding method.

Furthermore, the target substance to be wrapped may be a liquid, powder, or solid matter such as tablets. It should be noted that, particularly when inflation molding is used to obtain a film, the inner-surface side of the film is called the "bubble inner surface," while the outer-surface side is called the "bubble outer surface."

A water-soluble film obtained by the melt extrusion method has a coarser surface than a water-soluble film obtained by the solution-casting method; however, a film having fine irregularities on its surface can be intentionally manufactured through the melt extrusion method by compounding any filler. Also, when the T-die molding method is adopted, the obtained water-soluble film can have excellent smoothness or fine irregularities on the surface of the water-soluble film according to the surface configuration of the cooling roll.

Among the alkali metal salts of aliphatic acids suggested in the present invention, preferably an alkali metal salt of aliphatic acid having 6 to 22 carbon atoms, or even one having 8 to 22 carbon atoms, or 6 to 18 carbon atoms, is used for the water-soluble film to be obtained by this method, where adopting an alkali metal salt of aliphatic acid having 6 to 14 carbon atoms can improve the anti-blocking property of the water-soluble film. Also, an alkali metal salt of aliphatic acid having 8 to 12 carbon atoms can improve the anti-blocking property even further.

Additionally, when the water-soluble film is obtained by melt extrusion, preferably glycerin, diglycerin, or polyethylene glycol is selected as the plasticizer used under the present invention. By selecting such plasticizer, an excellent water-soluble film, especially in terms of having low adhesion strength to metal seal bars, can be obtained due to the interaction between the plasticizer and the alkali metal salt of aliphatic acid and phosphate ester surfactant, particularly the alkali metal salt of aliphatic acid, even when the water-soluble film is obtained by melt extrusion.

Furthermore, when the water-soluble film proposed by the present invention is obtained by melt extrusion, a filler may or may not be compounded, a phosphate ester surfactant may or may not be compounded, and a powder may or may not be deposited.

Preferably the water-soluble film proposed by the present invention has a surface roughness (Sa) of 700 nm or lower and/or surface gloss of 15% or higher, or more preferably it has a surface roughness (Sa) of 600 nm or lower and/or surface gloss of 20% or higher, or yet more preferably it has a surface roughness (Sa) of 400 nm or lower and/or surface gloss of 20% or higher, or most preferably it has a surface roughness (Sa) of 100 nm or lower and/or surface gloss of 100% or higher, on one side or both sides thereof.

When the film has a low surface roughness (Sa) and/or high gloss, it indicates that its surface is smooth above a certain level. Wrapped packets consisting of a liquid detergent or other content being wrapped by such smooth water-soluble film have an extremely smooth surface and richer gloss.

According to the present invention, such smooth and/or highly glossy water-soluble film can still demonstrate an excellent effect of preventing blocking to a sufficient degree. In particular, the film can have a blocking strength of 70 mN/25 mm or lower, or preferably 60 mN/25 mm or lower, or more preferably 40 mN/25 mm or lower.

Also, the water-soluble film proposed by the present invention can achieve a tensile modulus of 30 MPa or higher, or preferably 100 MPa or higher. When the film has a tensile modulus of 100 MPa or higher, the feeding tension of the roll can be lowered and the wrapping process can be run at high speed.

As a result, packets wrapped with a water-soluble film --where the wrapped packets are heat-sealed, or sealed with water or other solvent, using a water-soluble film characterized in that it has an excellent glossy appearance and at least one of its seal bar adhesion strength, tensile modulus, and roll feeding tension has been adjusted to an appropriate range-- can be manufactured more reliably and quickly.

The water-soluble film proposed by the present invention may be formed only by a single layer, or it may be constituted by two or more layers --each having the compositional makeup of water-soluble film described in the present inventionstacked one atop the other. Also, the film is used for heat sealing or water sealing.

Applications of the aforementioned water-soluble film include, for example, chemical-agent wrapping films used for wrapping detergents, agricultural chemicals, pharmaceuticals, and other chemical agents, for example. As a dosage form, powder, solid, gel, liquid, etc. can be listed.

### Examples

Water-soluble films of 75 µm or 28 µm in thickness were formed according to the compositional makeups shown in Table 1 below.

Examples 1 to 32 and Comparative Examples 1 to 12 were formed by the solution-casting method on the surface of a base material, while Examples 33 to 36 and Comparative Examples 13, 14 were formed by the melt extrusion/inflation method.

The materials used are listed below.
A-1: Maleic acid-modified polyvinyl alcohol of 1700 in degree of polymerization, 95 percent by mol in average degree of saponification and 3.6 percent by mol in degree of modification
A-2: Maleic acid-modified polyvinyl alcohol of 1700 in degree of polymerization, 89 percent by mol in average degree of saponification and 1.9 percent by mol in degree of modification
A-3: Maleic acid-modified polyvinyl alcohol of 1000 in degree of polymerization, 89 percent by mol in average degree of saponification and 1.9 percent by mol in degree of modification
A-4: Unmodified polyvinyl alcohol of 900 in degree of polymerization and 89 percent by mol in average degree of saponification
B-1: Glycerin
B-2: Sorbitol
B-3: PEG400
B-4: Diglycerin
D-1: Diethyl hexyl sulfosuccinic acid salt
D-2: Polyoxyethylene alkyl ether phosphate ester salt
D-3: Polyoxyethylene alkyl ether sulfate ester salt
E-1: Silica of 4.7 µm in average grain size and 0.26 g/ml in apparent specific gravity
E-2: High amylose corn starch of 15 µm in average grain size and 0.40 to 0.70 g/ml in apparent specific gravity
E-3: Talc of 3.3 µm in average grain size and 0.22 g/ml in apparent specific gravity
E-4: Aluminosilicate of 3.0 µm in average grain size and 0.80 g/ml in apparent specific gravity
F-1: Starch of 15 µm in average grain size and 0.60 to 0.80 g/ml in apparent specific gravity

### <Moisture Content of Film>

The water-soluble films were measured for moisture content using a Karl Fischer moisture titrator (AQV-2200S, manufactured by Hiranuma Sangyo Co., Ltd.).

### <Bleeding Adhesion of Roll of Film>

The water-soluble films, with their width adjusted to 660 mm, were each taken up by 500 m onto an aluminum-sandwiching seamless paper tube of 3 inches in inner diameter and 8 mm in thickness, to prepare rolls of film.

The rolls of film were wrapped with a 35-µm high-density polyethylene (HDPE), and then with a polycloth kraft paper (cloth surface on the outside), and stored for 15 days in an environment of 40°C and 35 percent relative humidity. After the storage period, the films were classified into three levels based on surface bleeding condition, stickiness, and degree of adhesion according to the standards below:
There is no bleeding, stickiness, or adhesion --- O
There is bleeding, as well as stickiness and adhesion --- Δ
There is a lot of bleeding, as well as stickiness and adhesion --- ×

### <Seal Bar Adhesion Strength>

The films were measured for seal bar adhesion strength using a heat-seal tester (TP-701B, manufactured by Tester Sangyo Co., Ltd.) and a digital force gauge (DS2-50N, manufactured by Imada Co., Ltd.).

### • Preparation of Heat Seal Tester

1) Prior to heat sealing, the top aluminum seal bar was polished 10 times using a 1000-grit sandpaper.
2) The top aluminum seal bar was also wiped 10 times with a lab towel (manufactured by Unichemy Co., Ltd.) that had been moistened with methanol. These test preparation steps were repeated every time the compositional makeup of film to be tested was changed.

### • Heat Sealing Conditions

Upper sealing element: 10-mm wide seal bar made of aluminum, 130°C
Lower sealing element: Made of rubber, with Teflon tape, 30°C
Sealing time: 1 second
Sealing pressure: 0.35 MPa

### • Seal Bar Adhesion Strength

Two films of the compositional makeup to be tested were heat-sealed 10 times successively at different locations, after which new films of 70 mm in width were prepared and heat-sealed to produce a heat-sealed part of 10 mm long x 70 mm wide. At this point, one end of the films that had been heat-sealed was adhering to the seal bar. Next, the other end that had not been heat-sealed was pinched with a clip, after which the tip of the digital force gauge was hooked onto the clip and the digital force gauge was pulled in the lateral direction in an attempt to peel the heat-sealed part from the seal bar, to measure the maximum strength as the force required to peel the heat-sealed part from the seal bar.

Here, the two 70-mm wide water-soluble films were placed one atop the other with their air surfaces facing each other if the films were formed by the solution-casting method, or with their bubble inner surfaces facing each other if the films were formed by the melt extrusion/inflation method.

The lower its seal bar adhesion strength, the higher the certainty becomes that the water-soluble film can be peeled from metal seal bars, etc., in actual heat-sealing operations because of the shearing force generated between the surface of the metal seal bars, etc., and the surface of the water-soluble film due to movement of the water-soluble film.

### <Surface Roughness Sa>

The water-soluble films were measured for surface roughness on their cast surface and air surface, respectively, if the films were formed by the solution-casting method, or on their bubble outer surface and bubble inner surface, respectively, if the films were formed by the melt extrusion/inflation method, using a non-contact surface/layer cross-section shape measurement system (VertScan 2.0 R5500GML-A150-AC, manufactured by Ryoka Systems, Inc.).

Measurement conditions: Single field of view, object lens x10, wavelength filter 530 white, measurement mode WaveT, view size 470 x 350 µm, scan range -10 to +10 µm, average number of measurements 1, four-dimensional surface correction

### <Gloss>

The water-soluble films were measured for gloss on their cast surface and air surface, respectively, if the films were formed by the solution-casting method, or on their bubble outer surface and bubble inner surface, respectively, if the films were formed by the melt extrusion/inflation method, at a measurement angle of 60° using a gloss meter (Gloss Meter VG 7000, manufactured by Nippon Denshoku Industries, Co., Ltd.).

### <Tensile Modulus>

The water-soluble films were measured for tensile modulus using a tensile tester (AGS-1kN, manufactured by Shimadzu Corporation).
Test piece: 15 mm wide x 150 mm long
Distance between chucks: 100 mm
Tensile test speed: 300 mm/min

### <Roll Feeding Tension>

The water-soluble films, with their width adjusted to 660 mm, were each taken up by 500 m onto an aluminum-sandwiching seamless paper tube of 3 inches in inner diameter and 8 mm in thickness, to prepare rolls of film.

The rolls of film were wrapped with a 35-µm high-density polyethylene (HDPE), and then with a polycloth kraft paper (cloth surface on the outside), and stored for 15 days in an environment of 40°C and 35 percent relative humidity.

After the storage period, the rolls of film were each installed on a slitter machine and unrolled to measure the maximum tension using a tension detector (LE-40MTB, manufactured by Mitsubishi Electric Corporation).
Feeding test speed: 5 m/min

### <Blocking Strength>

Two 25-mm wide x 250-mm long pieces of each water-soluble film were placed one atop the other with their cast surfaces or bubble outer surfaces in contact, and stored for 24 hours in an environment of 23°C and 50 percent relative humidity.

Thereafter, a 5-kg iron sheet was placed on top of the two layered films, and stored further for 24 hours in an environment of 23°C and 50 percent relative humidity. After the storage period, the films had the moisture contents shown in Table 3.

T-peel test was performed using a tensile compression tester (TG-5kN, manufactured by Minebea Co., Ltd.) to measure the average blocking strength (mN/25 mm) over a section of 200 mm.
Tensile test speed: 200 mm/min

### <Example 1>

An aqueous solution of resin composition was obtained by adding together:
100 parts by weight of A-1 as a polyvinyl alcohol resin (A);
30 parts by weight of B-1 and 15 parts by weight of B-2 as a plasticizer (B);
0.5 parts by weight of sodium caproate as an aliphatic acid (C);
0.5 parts by weight of D-1 as a surfactant (D);
6 parts by weight of E-1 as a filler (E); and
water.

This aqueous solution was formed on the surface of a base material according to the solution-casting method, to obtain a water-soluble film of 75 µm in thickness and 6.3 percent by weight in moisture content.

### <Examples 2 to 32>

In Examples 2 to 32, water-soluble films were obtained according to Example 1 above by following the compositional makeups shown in Table 1.

In Examples 27 to 32, F-1 was deposited on both sides of the formed water-soluble films as a powder.

### <Example 33>

A water-soluble film of 28 µm in thickness and 5.0 percent by weight in moisture content was obtained by the melt extrusion/inflation method using a composition constituted by:
100 parts by weight of A-4 as a polyvinyl alcohol resin (A);
10 parts by weight of B-3 as a plasticizer (B);
0.3 parts by weight of sodium stearate as an aliphatic acid (C); and
0.5 parts by weight of E-3 as a filler (E).

### <Examples 34 to 36>

In Examples 34 to 36, water-soluble films were obtained according to Example 33 above by following the compositional makeups shown in Table 1.

### <Comparative Examples 1 to 12>

In Comparative Examples 1 to 12, water-soluble films were obtained according to Example 1 above by following the compositional makeups shown in Table 1.

### <Comparative Examples 13, 14>

In Comparative Examples 13, 14, water-soluble films were obtained according to Example 33 above by following the compositional makeups shown in Table 1.

**[Table 1]**

| | Thick ness (µm) | A (parts by weight) | B (parts by weight) | C | | D | E | F | Moisture content (% by weight ) | Bleedin g/adhes ion of rolled film | Seal bar adhesion strength (gf/70 mm) |
|---|---|---|---|---|---|---|---|---|---|---|---|
| | | | | Fatty acid | Additive quantity (parts by weight) | Surfactant (parts by weight) | Additive quantity (parts by weight) | Applicati on quantity (g/m²) | | | |
| Example 1 | | | | Sodium caproate | 0.5 | D-1(0.5) | | | 6.3 | ○ | 880 |
| Example 2 | | | | Sodium caprylate ate | 0.5 | | | | 5.7 | ○ | 610 |
| Example 3 | | | | Sodium caprate | | | | | 6.0 | ○ | 480 |
| Example 4 | | | | Sodium laurate | 0.1 | | | | 5.8 | ○ | 600 |
| Example 5 | | | | | 0.2 | | | | 5.8 | ○ | 560 |
| Example 6 | | | | | 0.4 | | | | 6.4 | ○ | 510 |
| Example 7 | | | | | 0.5 | | | | 6.2 | ○ | 520 |
| Example 8 | | | | | 3 | | | | 6.1 | ○ | 490 |
| Example 9 | | | | Sodium myristate | 0.5 | | | | 6.4 | ○ | 470 |
| Example 10 | 75 | A-1(100) | B-1 (30)/B -2(15) | Sodium palmitate | | | E-1(6) | None | 6.8 | ○ | 470 |
| Example 11 | | | | Sodium stearate | | | | | 6.4 | ○ | 340 |
| Example 12 | | | | Potassium laurate | | | | | 6.4 | ○ | 560 |
| Example 13 | | | | None | None | D-2(0.5) | | | 5.9 | ○ | 300 |
| Example 14 | | | | Sodium laurate | 0.5 | D-2(0.1) | | | 6.3 | ○ | 220 |
| Example 15 | | | | | | D-2(0.2) | | | 6.2 | ○ | 110 |
| Example 16 | | | | | | D-2(0.5) | | | 6.0 | ○ | 80 |
| Example 17 | | | | | | D-3(0.5) | | | 6.2 | ○ | 560 |
| Example 18 | | | | | | D-1(0.5)/D-2(0.2)/D-3(0.2) | | | 6.0 | ○ | 80 |
| Example 19 | | A-2(100) | B-1(8) | | | D-1(0.5) | E-1(6) | None | 5.3 | ○ | 460 |
| Example 20 | | | B-1(21) | | | | | | 5.9 | ○ | 490 |
| Example 21 | | | B-1(30) | | | | | | 6.2 | ○ | 500 |
| Example 22 | | A-2(40)/A-3(60) | B-1(15)/B -3(15) | | | | | | 5.9 | ○ | 470 |
| Example 23 | | | B-1(40)/B -2(15) | | | | | | 6.4 | ○ | 550 |
| Example 24 | | | | | | | None | None | 6.1 | ○ | 590 |
| Example 25 | 75 | | | Sodium laurate | 0.5 | | E-1(3) | | 6.1 | ○ | 570 |
| Example 26 | | | | | | | E-2(6) | | 6.0 | ○ | 500 |
| Example 27 | | | | | | | None | F-1(0.04) | 6.0 | ○ | 590 |
| Example 28 | | A-1(100) | B-1(30)/B -2(15) | | | | | F-1(0.09) | 6.5 | ○ | 550 |
| Example 29 | | | | | | D-1(0.5) | | F-1(0.18) | 6.5 | ○ | 530 |
| Example 30 | | | | | | | E-1(6) | F-1(0.04) | 6.3 | ○ | 500 |
| Example 31 | | | | | | | | F-1(0.09) | 6.5 | ○ | 490 |
| Example 32 | | | | | | | | F-1(0.18) | 6.1 | ○ | 460 |
| Example 33 | 28 | A-4(100) | B-3(10) | Sodium stearate | 0.3 | None | E-3(0.5) | None | 3.0 | ○ | 220 |
| Example 34 | | | B-4(18) | | | | E-3(3) | | 4.6 | ○ | 280 |
| Example 35 | | | B-4(13) | | | | E-4(2.5) | | 4.5 | ○ | 290 |
| Example 36 | | | B-4(13) | Sodium behenate | 0.5 | | E-4(2.5) | | 5.9 | ○ | 480 |
| Comparative Example 1 | | | | None | None | | | | 6.4 | ○ | 1010 |
| Comparative Example 2 | | | | Calcium laurate | | | | | 4.3 | Δ | 590 |
| Comparative Example 3 | | | | Barium laurate | | | | | 4.6 | Δ | 330 |
| Comparative Example 4 | | | | Lauric acid | | | | | 5.2 | x | 580 |
| Comparative Example 5 | | | | Stearic acid | | | | | 4.4 | x | 560 |
| Comparative Example 6 | | | | Castor oil | | | | | 5.3 | x | 580 |
| Comparative Example 7 | 75 | A-1(100) | B-1(30)/B -2(15) | Diethanolam ide laurate | 0.5 | D-1(0.5) | E-1(6) | None | 4.3 | Δ | 1080 |
| Comparative Example 8 | | | | Stearyl dimethylami no propylamide | | | | | 4.6 | ○ | 1250 |
| Comparative Example 9 | | | | Polyoxyethy lene lauryl ether | | | | | 4.5 | Δ | 1200 |
| Comparative Example 10 | | | | Sorbitan sesquioleate | | | | | 4.3 | ○ | 940 |
| Comparative Example 11 | | | | Sodium butyrate | | | | | 6.3 | ○ | 780 |
| Comparative Example 12 | | A-2(100) | B-1(55) | Sodium laurate | | | | | 6.3 | x | 730 |
| Comparative Example 13 | 28 | A-4(100) | B-4(13) | Sodium montanate | 0.5 | None | E-4(2.5) | None | 5.7 | ○ | 890 |
| Comparative Example 14 | | | | None | None | | | | 4.5 | ○ | 1280 |

**[Table 2]**

| | Surface roughness Sa (nm) | | Gloss (%) | | Tensile modulus (MPa) | Roll feeding tension (N) |
|---|---|---|---|---|---|---|
| | Solution-casting method: Cast surface Melt extrusion method: Bubble outer surface | Solution-casting method: Air surface Melt extrusion method: Bubble inner surface | Solution-casting method: Cast surface Melt extrusion method: Bubble outer surface | Solution-casting method: Air surface Melt extrusion method: Bubble inner surface | | |
| Example 1 | 355 | 328 | 24 | 29 | 40 | 24 |
| Example 2 | 372 | 321 | 23 | 32 | 37 | 20 |
| Example 3 | 321 | 297 | 31 | 34 | 38 | 21 |
| Example 7 | 329 | 300 | 29 | 35 | 30 | 11 |
| Example 9 | 352 | 322 | 24 | 31 | 32 | 28 |
| Example 10 | 344 | 304 | 28 | 34 | 30 | 45 |
| Example 11 | 325 | 318 | 31 | 36 | 34 | 49 |
| Example 19 | 322 | 299 | 27 | 34 | 1840 | 7 |
| Example 21 | 340 | 303 | 25 | 32 | 36 | 10 |
| Example 22 | 356 | 318 | 26 | 30 | 56 | 9 |
| Example 24 | 11 | 9 | 135 | 145 | 30 | 38 |
| Example 27 | 185 | 161 | 82 | 88 | 30 | 11 |
| Example 29 | 175 | 151 | 85 | 92 | 31 | 9 |
| Example 30 | 575 | 528 | 18 | 22 | 33 | 6 |
| Example 32 | 600 | 573 | 15 | 20 | 34 | 5 |
| Example 33 | 61 | 47 | 116 | 114 | 2100 | 16 |
| Example 34 | 300 | 229 | 47 | 44 | 180 | 10 |
| Example 35 | 146 | 137 | 76 | 70 | 1150 | 7 |
| Comparative Example 1 | 368 | 307 | 24 | 34 | 32 | 56 |
| Comparative Example 11 | 363 | 330 | 22 | 30 | 32 | 41 |

**[Table 3]**

| | Moisture content (% by weight) | Blocking strength |
|---|---|---|
| Example 1 | 14.0 | 57 |
| Example 2 | 13.6 | 44 |
| Example 3 | 13.9 | 55 |
| Example 7 | 14.0 | 12 |
| Example 9 | 14.2 | 62 |
| Example 10 | 14.4 | 107 |
| Example 11 | 14.1 | 118 |
| Example 19 | 9.2 | 0 |
| Example 21 | 13.1 | 20 |
| Example 22 | 12.1 | 16 |
| Example 24 | 14.1 | 50 |
| Example 27 | 13.8 | 13 |
| Example 29 | 14.0 | 11 |
| Example 30 | 13.8 | 8 |
| Example 32 | 14.0 | 6 |
| Example 33 | 6.6 | 15 |
| Example 34 | 7.9 | 8 |
| Example 35 | 7.0 | 0 |
| Comparative Example 1 | 14.2 | 140 |
| Comparative Example 11 | 13.9 | 80 |

According to the results of Examples 1 to 12 and 14 to 36, use of alkali metal salts of aliphatic acids having 6 to 22 carbon atoms would lead to lower values of seal bar adhesion strength, allowing for easy peeling of the heat-sealed film from the seal bar to facilitate heat sealing. Also, according to the results of Examples 1 to 3, 7 and 9, use of alkali metal salts of aliphatic acids having 6 to 14 carbon atoms could achieve lower roll feeding tension and blocking strength, where alkali metal salts of lauric acids having 12 carbon atoms could achieve particularly low roll feeding tension and blocking strength. Use of sodium butyrate having 4 carbon atoms or sodium montanate having 28 carbon atoms would lead to higher seal bar adhesion strength, which makes it easy for the water-soluble film to stick to the seal bar during heat sealing, and therefore lower roll feeding tension or blocking strength cannot be expected. Also, according to Examples 19 and 21, use of less plasticizer would result in improved tensile modulus, and consequently lower roll feeding tension and blocking strength.

According to the results of Examples 15 and 16, lower seal bar adhesion strength could be achieved by selecting a phosphate ester surfactant as the surfactant.

According to Example 24 and other Examples, adding a filler and/or providing a powder treatment could increase the surface roughness and decrease the gloss.

### <Heat Seal Strength>

Two 70-mm wide pieces of each water-soluble film were placed one atop the other and heat-sealed using a heat seal tester (TP-701B, manufactured by Tester Sangyo Co., Ltd.).
Upper sealing element: 10-mm wide seal bar made of aluminum, 130°C
Lower sealing element: Made of rubber, with Teflon tape, 30°C
Sealing time: 1 second
Sealing pressure: 0.35 MPa

The heat-sealed part was cut to a width of 15 mm and measured for maximum heat seal strength using a tensile tester (AGS-1kN, manufactured by Shimadzu Corporation).
Tensile test speed: 300 mm/min

When the water-soluble films in the Examples and Comparative Examples were heat-sealed according to the aforementioned method, each using two pieces of film, all of the water-soluble films demonstrated a seal strength of 7 to 12 N/15 mm.

### <Water Seal Strength>

Using a lab towel (manufactured by Unichemy Co., Ltd.) that had been moistened with water, 35 to 40 g/m² of water was applied to an A4-sized piece of each water-soluble film.

The moistened film was immediately placed on top of another piece of film to which water had not been applied, and the films were pressure-bonded by rolling a 1.5-kg aluminum roller over them three times.

The water-sealed part of the bonded water-soluble films was cut to a width of 15 mm and measured for maximum water seal strength using a tensile tester (AGS-1kN, manufactured by Shimadzu Corporation).
Tensile test speed: 300 mm/min

When the water-soluble films in the Examples and Comparative Examples were water-sealed according to the aforementioned method, each using two pieces of film, all of the water-soluble films demonstrated a seal strength of 13 to 20 N/15 mm.

## Claims

1. A water-soluble film containing A to D below:
A. a polyvinyl alcohol resin;
B. a plasticizer;
C. an alkali metal salt of aliphatic acid having 6 to 22 carbon atoms and/or D. phosphate ester surfactant.

2. The water-soluble film according to claim 1, wherein C is an alkali metal salt of aliphatic acid having 6 to 14 carbon atoms.

3. The water-soluble film according to claim 1 or 2, whose tensile modulus is 100 MPa or higher.

4. The water-soluble film according to any one of claims 1 to 3, having F. a powder deposited on one side or both sides thereof.

5. The water-soluble film according to any one of claims 1 to 4, containing E. a filler.

6. The water-soluble film according to any one of claims 1 to 5, having a surface roughness (Sa) of 400 nm or lower and/or surface gloss of 15% or higher on one side or both sides thereof.

7. The water-soluble film according to claim 6, having a surface roughness (Sa) of 100 nm or lower and/or surface gloss of 100% or higher on one side or both sides thereof.

8. The water-soluble film according to any one of claims 1 to 7, whose blocking strength is 70 mN/25 mm or lower.

## Amended claims

### Amended claims under Art. 19.1 PCT

1. A water-soluble film containing A to D below:
A. a polyvinyl alcohol resin;
B. a plasticizer;
C. an alkali metal salt of aliphatic acid having 6 to 22 carbon atoms and/or D. phosphate ester surfactant.

2. The water-soluble film according to claim 1, wherein C is an alkali metal salt of aliphatic acid having 6 to 14 carbon atoms.

3. The water-soluble film according to claim 1 or 2, whose tensile modulus is 100 MPa or higher.

4. The water-soluble film according to any one of claims 1 to 3, having F. a powder deposited on one side or both sides thereof.

5. The water-soluble film according to any one of claims 1 to 4, containing E. a filler.

6. (Added) The water-soluble film according to any one of claims 1 to 5, constituted by one, or two or more layers where each layer contains A to D below:
A. a polyvinyl alcohol resin;
B. a plasticizer;
C. an alkali metal salt of aliphatic acid having 6 to 22 carbon atoms and/or D. phosphate ester surfactant.

7. (Amended) The water-soluble film according to any one of claims 1 to 6, having a surface roughness (Sa) of 400 nm or lower and/or surface gloss of 15% or higher on one side or both sides thereof.

8. (Amended) The water-soluble film according to claim 7, having a surface roughness (Sa) of 100 nm or lower and/or surface gloss of 100% or higher on one side or both sides thereof.

9. (Amended) The water-soluble film according to any one of claims 1 to 8, whose blocking strength is 70 mN/25 mm or lower.

Statement under Art. 19.1 PCT
In Cited Literature 1, the compositional makeup for forming a water-soluble resin layer in and of itself shares commonality with the compositional makeup of the film under the present invention; however, the invention described in Cited Literature 1 requires that such layer is stacked with a moisture-permeable base material.

Accordingly, the water-soluble film under the present invention differs from the invention described in Cited Literature 1 in that, while the former is essentially a single layer, the latter is constituted by a water-soluble resin layer stacked with a moisture-permeable base material.
